# EUROPEAN PATENT APPLICATION

(11) **EP 4 250 165 A1**
(43) Date of publication of application: **27.09.2023**
(21) Application number: 22198705.0
(22) Date of filing: 29.09.2022
(51) Int. Cl.: G06F 30/12, G06F 30/17, G06F 30/20, G06F 119/18

(54) **DESIGN SUPPORT APPARATUS, PROGRAM, AND DESIGN SUPPORT METHOD**

(30) Priority: 22.03.2022 JP 2022046020
(71) Applicant: FUJIFILM Business Innovation Corp., Minato-ku Tokyo (JP)
(72) Inventor: KODAMA, Kakeru, Ebina-shi (JP); SAITO, Shinichiro, Ebina-shi (JP)
(74) Representative: Haseltine Lake Kempner LLP

(57) **Abstract**

A design support apparatus (10) includes a processor (11) configured to: extract a component from a three-dimensional model that includes a combination of multiple components; and display determination results, in a display form predetermined in the determination results, the determination results being obtained by determining whether a component other than the extracted component interferes with a virtual model, generated on the three-dimensional model, in a relationship between the virtual model and the extracted component.

## Description

### Background

### (i) Technical Field

The present disclosure relates to a design support apparatus, a program, and a design support method.

### (ii) Related Art

Japanese Unexamined Patent Application Publication No. 09-081608 discloses a housing manufacturing support system that design-supports a housing on a computer-aided design (CAD) system. The housing manufacturing support system includes a device configuration setting unit, space calculating unit, and mounting position setting unit. The device configuration setting unit produces device configuration information on a housing by receiving an approximate mounting position of each device that is mounted on the housing in an interactive manner with a database and the CAD system. The database pre-registers device size information indicating sizes of a variety of devices, tool size information indicating a size of each tool used to mount each device to the housing, and adjustment and maintenance information indicating an adjustment and maintenance method of the housing. In accordance with the device configuration information, the space calculating unit retrieves, from the database, the device size information related to each device to be mounted to the housing, tool size information, and adjustment and maintenance information. From these pieces of information, the space calculating unit calculates space information related to assembly space of each device and adjustment and maintenance space. The mounting position setting unit determines a mounting position of each device that is to be mounted on the housing in a manner such that devices do not interfere with each other in view of the space information.

Japanese Unexamined Patent Application Publication No. 09-147166 discloses an interference check method of assembly tools. A three-dimensional (3D) computer-aided system (CAD), storing mechanism design data related to an assembly including multiple components, outputs component shape data and data indicating a positional relationship of each component and an order of assembly of components. The interference check method includes detecting a mounting position of each component forming the assembly in accordance with the component shape data and the data indicating the positional relationship of each component and the order of assembly of the components. The interference check method further includes selecting an assembly tool that is to be used at each of the detected mounting positions, placing sequentially the selected assembly tool at a corresponding mounting position to determine whether an assembled component interferes with a selected assembly tool, and determining an assembly order of each component such that all the selected assembly tools do not interfere with the assembled component.

Japanese Unexamined Patent Application Publication No. 2021-051651 discloses a tool interference verification method. The tool interference verification method includes detecting a fastening component that is to be tightened out of multiple components that form 3D assembly components, acquiring at least one piece of information including information on how the fastening component is tightened and attribute information on the fastening component, setting a tool used to tighten the detected fastening component and a placement location of the tool, generating an interference verification model used to verify interference of the set tool and placing the interference verification model at the placement location, and determining whether the placed interference verification model interferes with a component other than the fastening component. The interference verification model includes a tool model corresponding to the size and shape of the tool and a clearance model that is space within a predetermined range from an outer surface of the tool model. The predetermined range of the clearance model is set in accordance with at least one piece of information including method information used to tighten the fastening component and attribute information on the component placed within a predetermined distance of the fastening component.

When components are actually assembled in accordance with 3D CAD data, assembling may be sometimes difficult. For example, components may interfere with each other or it may be difficult to put an assembly tool between the components.

### Summary

Accordingly, it is an object of the present disclosure to provide a design support apparatus, a program, and a design support method visually verifying results of determination as to whether assembling components is difficult.

According to a first aspect of the present disclosure, there is provided a design support apparatus including a processor configured to: extract a component from a three-dimensional model that includes a combination of multiple components; and display determination results, in a display form predetermined in the determination results, the determination results being obtained by determining whether a component other than the extracted component interferes with a virtual model, generated on the three-dimensional model, in a relationship between the virtual model and the extracted component.

In the design support apparatus of a second aspect, the processor may be configured to display, in different display forms, a first component that the determination results have determined as interfering with the virtual model and a second component that the determination results have not determined as interfering with the virtual model.

In the design support apparatus of a third aspect, the processor may be configured to display, in different colors as the different display forms, the first component determined as interfering with the virtual model and the second component not determined as interfering with the virtual model.

In the design support apparatus of a fourth aspect, the processor may be configured to display, in different colors as the different display forms, the extracted component having a predetermined relationship with the virtual model that the determination results have determined as being interfered with the first component and the second component that the determination results have not determined as interfering with the virtual model.

In the design support apparatus of a fifth aspect, the processor may be configured to display, in different colors, the virtual model determined as being interfered with a first component and a second component not determined to interfere with the virtual model.

In the design support apparatus of a sixth aspect, the processor may be configured to, if the virtual model is determined as being interfered with a first component, generate, on the three-dimensional model, a virtual index covering part of the first component interfering with the virtual model.

In the design support apparatus of a seventh aspect, the extracted component may be a gear, and the processor may be configured to determine whether the gear interferes with the virtual model that is larger by a predetermined size than an inner diameter of a shaft hole of the gear.

In the design support apparatus of an eighth aspect, the processor may be configured to set a side of the virtual model free from being interfered with to be aligned with a direction of assembly of the gear.

In the design support apparatus of a ninth aspect, the processor may configured to: place in the shaft hole of the gear the virtual model smaller than the inner diameter of the shaft hole of the gear by a predetermined size; and if the virtual model is moved from the gear toward an upstream side in the direction of assembly by a predetermined distance, determine whether a component within the shaft hole interferes with the virtual model.

In the design support apparatus of a tenth aspect, the processor may be configured to place the virtual model having a predetermined size in the direction of assembly to determine whether another component interferes with the virtual model.

In the design support apparatus of an eleventh aspect, the processor may be configured to, if faces of a first component determined as interfering with the virtual model are acquired and an angle made by the faces is smaller than a predetermined angle, display the first component having the angle smaller than the predetermined angle in a display form different from a display form of a second component not determined as interfering with the virtual model.

In the design support apparatus of a twelfth aspect, the processor may be configured to change a color of the extracted component if no other component is determined as interfering with one of an upper end and a lower end of the extracted component in a vertical direction in a predetermined process that assembles the components.

In the design support apparatus of a thirteenth aspect, the processor may be configured to: extract a similar component within a predetermined range of similarity with respect to the extracted component; and change a color of the similar component.

According to a fourteenth aspect of the present disclosure, there is provided a program causing a computer to execute a process for design supporting, the process including: extracting a component from a three-dimensional model that includes a combination of a plurality of components; and displaying determination results, in a display form predetermined in the determination results, the determination results being obtained by determining whether a component other than the extracted component interferes with a virtual model, generated on the three-dimensional model, in a relationship between the virtual model and the extracted component.

According to a fifteenth aspect of the present disclosure, there is provided a design support method including: extracting a component from a three-dimensional model that includes a combination of a plurality of components; and displaying determination results, in a display form predetermined in the determination results, the determination results being obtained by determining whether a component other than the extracted component interferes with a virtual model, generated on the three-dimensional model, in a relationship between the virtual model and the extracted component.

According to the first aspect, the determination results as to whether assembling components is difficult may be visually verified.

According to the second aspect, an interfering component and a non-interfering component may be visually recognized.

According to the third aspect, an interfering component may be visually recognized.

According to the fourth aspect, a component having a predetermined relationship with an interfering component may be visually recognized.

According to the fifth aspect, an interfered virtual model may be visually recognized.

According to the sixth aspect, a portion of a component interfering with the virtual model may be visually recognized.

According to the seventh aspect, the gear interfering with another component may be visually recognized.

According to the eighth aspect, the direction of assembly of the gear may be determined.

According to the ninth aspect, a determination as to whether a distance of insertion in assembling the gear satisfies a condition may be made.

According to the tenth aspect, the presence of any component interfering with the passage of the gear in assembling may be visually recognized.

According to the eleventh aspect, the possibility that a worker is hurt in assembling a component may be visually recognized.

According to the twelfth aspect, the possibility that a component falls when the component is assembled may be visually recognized.

According to the thirteenth aspect, assembling a component at an incorrect position in an assembly process may be controlled.

According to the fourteenth aspect, the determination results as to whether assembling components is difficult may be visually verified.

According to the fifteenth aspect, the determination results as to whether assembling components is difficult may be visually verified.

### Brief Description of the Drawings

Exemplary embodiment of the present disclosure will be described in detail based on the following figures, wherein:
Fig. 1 is a block diagram schematically illustrating a design support apparatus of an exemplary embodiment of the disclosure;
Fig. 2 is a flowchart illustrating an example of a flow of a process that determines a direction of assembly of a gear in the exemplary embodiment of the disclosure;
Fig. 3 illustrates part of three-dimensional (3D) computer-aided design (CAD) data that is opened in accordance with the exemplary embodiment of the disclosure;
Fig. 4 illustrates a gear that is extracted via image recognition in accordance with the exemplary embodiment of the disclosure;
Fig. 5 illustrates a virtual model generated on an upper side in an axial direction of the gear and a virtual model generated on a lower side in the axial direction of the gear in accordance with the exemplary embodiment of the disclosure;
Fig. 6 is a flowchart illustrating an example of a flow of a process that determines whether an assembly distance of the gear of the exemplary embodiment of the disclosure is appropriate;
Figs. 7A through 7C illustrate a state in which a virtual model is moved to interfere with an axis of rotation of the gear of the exemplary embodiment of the disclosure wherein the virtual model is generated and placed in a shaft hole of the gear;
Fig. 8 is a flowchart illustrating an example of a flow of a process that, when the gear of the exemplary embodiment of the disclosure is assembled, determines whether there is any component interfering with a passage of entrance of the gear and whether work space is secured;
Fig. 9 illustrates a state in which a component determined to interfere with the virtual model and a component not determined to interfere with the virtual model are displayed in different colors in accordance with the exemplary embodiment of the disclosure;
Fig. 10 is a flowchart illustrating an example of a flow of a process that, when the gear of the exemplary embodiment of the disclosure is assembled, determines whether there is a possibility that a worker is hurt;
Fig. 11 illustrates part of the extracted gear and the 3D CAD data of the exemplary embodiment of the disclosure;
Fig. 12 illustrates interference check results related to the virtual model generated in a direction of assembly of the gear of the exemplary embodiment of the disclosure;
Fig. 13 illustrates a state in which a virtual cylindrical index is generated and placed to cover an edge portion of another interfering component in accordance with the exemplary embodiment of the disclosure;
Fig. 14 illustrates a state in which an interfering component of the exemplary embodiment of the disclosure is displayed in a color different from a color of another component;
Fig. 15 is a flowchart illustrating an example of a flow of a process that, when the gear is assembled, determines whether there is a possibility that the gear of the exemplary embodiment of the disclosure falls;
Fig. 16 illustrates the gear of the exemplary embodiment of the disclosure, represented by the opened 3D CAD data, rotating shaft inserted into the shaft hole of the gear, and plate supporting the rotating shaft;
Fig. 17 illustrates a virtual model generated on the upper side in the axial direction of the gear of the exemplary embodiment of the disclosure and a virtual model generated on the lower side in the axial direction;
Fig. 18 is a flowchart illustrating an example of a flow of a process that determines whether there is a possibility that the gear of the exemplary embodiment of the disclosure is assembled at an incorrect position in an assembly process;
Fig. 19 illustrates a state in which a rectangular bounding box surrounding a minimum range of the gear is generated on the 3D CAD data of the exemplary embodiment of the disclosure;
Fig. 20 illustrates a state in which the gear of the exemplary embodiment of the disclosure and another gear determined to be within a similarity range with respect to the gear are displayed in different colors;
Fig. 21 is a flowchart illustrating an example of a flow of a process that, when a screw of the exemplary embodiment of the disclosure is assembled, determines whether there is any component interfering with a passage of entrance of the screw and whether work space is secured;
Fig. 22 illustrates a virtual model generated on the upper side in the axial direction of the screw of the exemplary embodiment of the disclosure and a virtual model generated on the lower side in the axial direction;
Fig. 23 illustrates a state in which a component determined to interfere with a virtual screwdriver of the exemplary embodiment of the disclosure and a component not determined to interfere with the virtual screwdriver are displayed in different colors in accordance with the exemplary embodiment of the disclosure;
Fig. 24 is a flowchart illustrating an example of a flow of a process that, when an E-ring is assembled, determines whether work space receiving the E-ring of the exemplary embodiment of the disclosure is secured;
Fig. 25 illustrates the E-ring that is inserted into a component of the exemplary embodiment of the disclosure opened by the 3D CAD data;
Fig. 26 illustrates a state in which a tip of a virtual E-ring holder of the exemplary embodiment of the disclosure is moved to a side of an outer circumference of the E-ring;
Fig. 27 illustrates a state in which an angle of the virtual E-ring holder of the exemplary embodiment of the disclosure interfering with another component and an angle of the virtual E-ring holder not interfering with the other component are displayed in different colors; and
Fig. 28 illustrates a virtual circle of the exemplary embodiment of the disclosure.

### Detailed Description

### Exemplary Embodiment

Exemplary embodiment of the disclosure is described with reference to the drawings. In the drawings, like elements are designated with like reference numerals. For convenience of explanation, the dimensions of elements may be exaggerated and not to scale.

A design support apparatus 10 of the exemplary embodiment is a general-purpose personal computer (PC) including a display and operation units including a keyboard and mouse. The design support apparatus 10 performs image processing on image information representing an image to be displayed on the display 16.

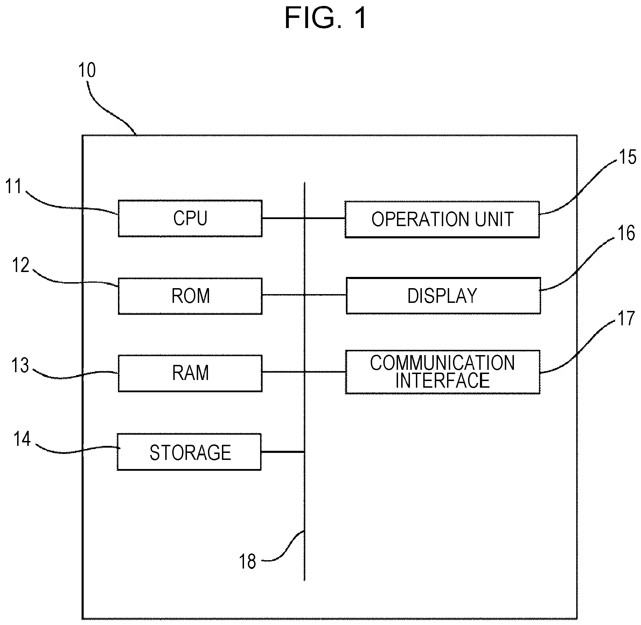

Fig. 1 is a block diagram schematically illustrating the design support apparatus 10 of the exemplary embodiment of the disclosure.

Referring to Fig. 1, the design support apparatus 10 includes a central processing unit (CPU) 11, serving as an example of a processor, read-only memory (ROM) 12, random-access memory (RAM) 13, storage 14, operation unit 15, display 16, and communication interface 17. These elements are interconnected to each other via a bus 18.

The CPU 11 executes a variety of programs and controls elements. Specifically, the CPU 11 reads programs from the ROM 12 or the storage 14, and executes the read programs using the RAM 13 as a working area. In accordance with the programs stored on the ROM 12 or the storage 14, the CPU 11 controls the elements and performs a variety of arithmetic operations. In the exemplary embodiment, the programs are stored on the ROM 12 or the storage 14.

The ROM 12 stores a variety of programs and a variety of data. The RAM 13 serves as a working area and temporarily stores the programs and data. The storage 14 includes a hard disk drive (HDD) or a solid-state drive (SSD) and stores a variety of programs including an operating system, and a variety of data. The storage 14 stores three-dimensional (3D) computer-aided design (CAD) data as an example of a 3D model including a combination of multiple components. The 3D model is not limited to 3D CAD data and may be 3D data that is generated from two-dimensional (2D) CAD data. The 3D CAD data may be stored not only on the storage 14 but also on another apparatus, such as a server apparatus. The storage 14 also stores assembly information data that represents the order of assembly according to which components represented by the 3D CAD data are assembled. The assembly information data may be stored not only on the storage 14 but also on another apparatus, such as a server apparatus. The assembly information data may be contained in the 3D CAD data.

The operation unit 15 includes a pointing device, such as a mouse, and a keyboard and is used to enter a variety of inputs.

The display 16 is a liquid-crystal display. The display 16 under the control of the CPU 11 displays a variety of information.

The communication interface 17 is connectable to an external device and exchanges a variety of data with the external device.

The operation of the design support apparatus 10 is described below.

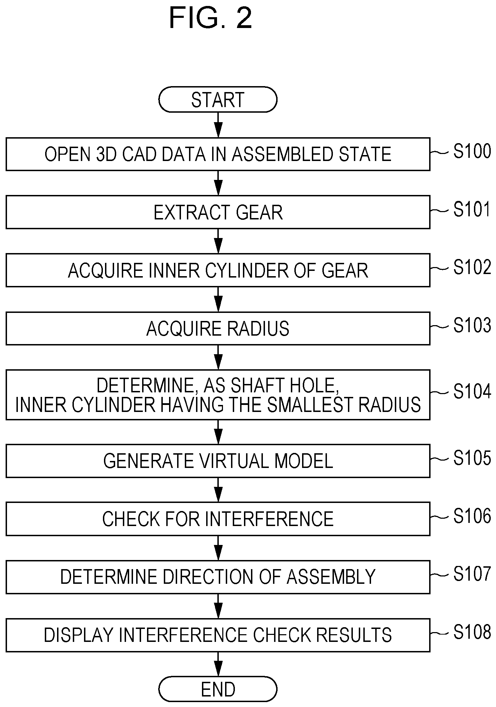

Fig. 2 is a flowchart illustrating an example of a flow of a process that determines a direction of assembly Y of a gear 100. The process in Fig. 2 is performed each time the gear 100 is assembled in accordance with the 3D CAD data. Specifically, the order of assembly is acquired separately from the assembly information data. The design support apparatus 10 executes an assembly process to assemble components in accordance with the order. When the gear 100 is to be assembled, the design support apparatus 10 performs the process in Fig. 2.

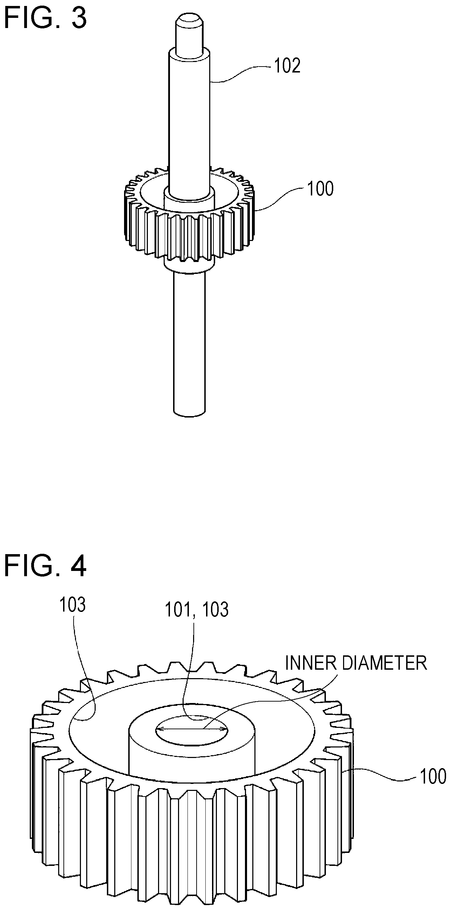

In step S100 in Fig. 2, the CPU 11 in the design support apparatus 10 retrieves from the storage 14 the 3D CAD data that includes a combination of components after the gear 100 is assembled and the CPU 11 opens the 3D CAD data. Fig. 3 illustrates part of the opened 3D CAD data, specifically, illustrates the gear 100 and a rotary shaft 102 that is to be inserted into a shaft hole 101 of the gear 100. The CPU 11 then proceeds to step S101.

In step S101, the CPU 11 in the design support apparatus 10 extracts the gear 100 from the 3D CAD data. The extraction is performed via image recognition that determines whether the gear 100 matches in shape the gear 100 predetermined by the 3D CAD data. The exemplary embodiment is not limited to the extraction of the gear 100 via the image recognition. Alternatively, information indicating that a component defined by the 3D CAD data is the gear 100 may be stored and the component corresponding to the information may be retrieved as the gear 100. Fig. 4 illustrates the gear 100 extracted via the image recognition. The CPU 11 proceeds to step S102.

In step S102, the CPU 11 in the design support apparatus 10 acquires an inner cylinder 103 (hollow cylinder) of the gear 100 extracted in step S101. According to the exemplary embodiment, the image of the gear 100 is recognized and all portions of the inner cylinder 103 are acquired. The CPU 11 proceeds to step S103.

In step S103, the CPU 11 in the design support apparatus 10 acquires the radius of the inner cylinder 103 extracted in step S102. According to the exemplary embodiment, the length of the radius of the inner cylinder 103 is acquired through measuring on the 3D CAD data. The exemplary embodiment is not limited to measuring the radius of the inner cylinder 103 on the 3D CAD data. Alternatively, data on each portion, such as the length of the radius of a component on the 3D CAD data, may be stored and then retrieved. The CPU 11 proceeds to step S104.

In step S104, the CPU 11 in the design support apparatus 10 recognizes, as a shaft hole 101 of the gear 100, the inner cylinder 103 having the smallest radius, out of the inner cylinders 103 acquired in step S103. In addition, the height of the gear 100 may be measured from the shaft hole 101 and the height of the recognized inner cylinder 103. The CPU 11 proceeds to step S105.

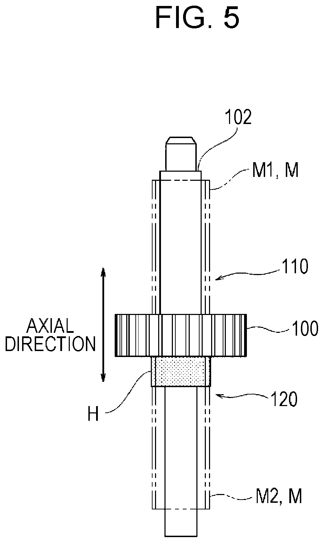

In step S105, the CPU 11 in the design support apparatus 10 generates a virtual model M, which is larger than by a predetermined size than the inner diameter of the shaft hole 101, in the shaft hole 101 of the gear 100 on the 3D CAD data. According to the exemplary embodiment, cylindrical virtual models M having a radius equal the radius of the shaft hole 101 + 2 mm and having a thickness of 1 mm and a height twice as tall as the height of the gear 100 are generated on an upper side 110 and a lower side 120 in the axis direction of the shaft hole 101 of the gear 100 (direction in parallel with the shaft hole 101). The virtual model M has a diameter larger than the diameter (inner diameter) of a rotary shaft 102 that is inserted into the shaft hole 101. The virtual models M is so sized that the rotary shaft 102 does not interfere with the virtual model M if the virtual model M covers the rotary shaft 102. The virtual model M thus covers the external side of the rotary shaft 102. Specifically, the virtual model M is so sized that the rotary shaft 102 does not interfere with the virtual model M and the virtual model M is so placed that the rotary shaft 102 does not interfere with the virtual model M. The size of the virtual model M is not limited to the one described above. If the height of the gear 100 in the axial direction is not measured, the height of the virtual model M is not necessarily twice as high as the gear 100. Fig. 5 illustrates a virtual model M1 generated on the upper side 110 in the axial direction of the gear 100 and a virtual model M2 generated on the lower side 120. The CPU 11 proceeds to step S106.

In step S106, the CPU 11 in the design support apparatus 10 performs interference check to determine whether another component interferes with the virtual model M generated in step S105. The interference check is performed by determining whether the virtual model is located at a position that overlaps another component on the 3D CAD data. The CPU 11 proceeds to step S107.

In step S107, the CPU 11 in the design support apparatus 10 determines a direction of assembly Y of the gear 100 from results of the interference check in step S106. Specifically, a side of the virtual model M that is not interfered with any other component is determined to be the direction of assembly Y. Specifically, if there is any component interfering with the virtual model M1 generated on the upper side 110 of the gear 100 and there are none of the components interfering with the virtual model M2 generated on the lower side 120 of the gear 100, the CPU 11 determines that the lower side 120 is the direction of assembly Y of the gear 100, specifically, determines that the gear 100 is to be assembled from the lower side 120. On the other hand, if there are none of the components interfering with the virtual model M1 generated on the upper side 110 of the gear 100 and there is any component interfering with the virtual model M2 generated on the lower side 120 of the gear 100, the CPU 11 determines that the upper side 110 is the direction of assembly Y of the gear 100, specifically, determines that the gear 100 is to be assembled from the upper side 110. Fig. 5 illustrates a state in which the virtual model M1 generated on the upper side 110 of the gear 100 is not interfered with any component and the virtual model M2 generated on the lower side 120 of the gear 100 is interfered with another component. Referring to Fig. 5, the upper side 110 is determined to be the direction of assembly Y. If both the upper side 110 and the lower side 120 are free from interference, both sides are determined to be the direction of assembly Y. The CPU 11 proceeds to step S108.

In step S108, the CPU 11 in the design support apparatus 10 displays the interference check results on the display 16. Specifically, a component H determined to interfere with the virtual model M and a component not determined to interfere with the virtual model M are displayed in different display forms on the 3D CAD data. In the different display forms, the component H determined to interfere with the virtual model M and the component not determined to interfere with the virtual model M are displayed in different colors. Specifically, only the component H determined to interfere with the virtual model M changes in color on the 3D CAD data. Referring to Fig. 5, the component H determined to interfere with the virtual model M and the component not determined to interfere with the virtual model M are displayed in different colors. The direction of assembly Y determined in step S107 is displayed on the display 16. The direction of assembly Y is also stored on the storage 14. The exemplary embodiment is not limited to the case in which the component H determined to interfere with the virtual model M and the component not determined to interfere with the virtual model M are displayed in different colors. Alternatively, the gear 100 may be displayed in a color different from a color applied when there is no component H interfering with the virtual model M. The process thus ends.

By visually recognizing the color, a design engineer may visually check the direction of assembly Y of the gear 100.

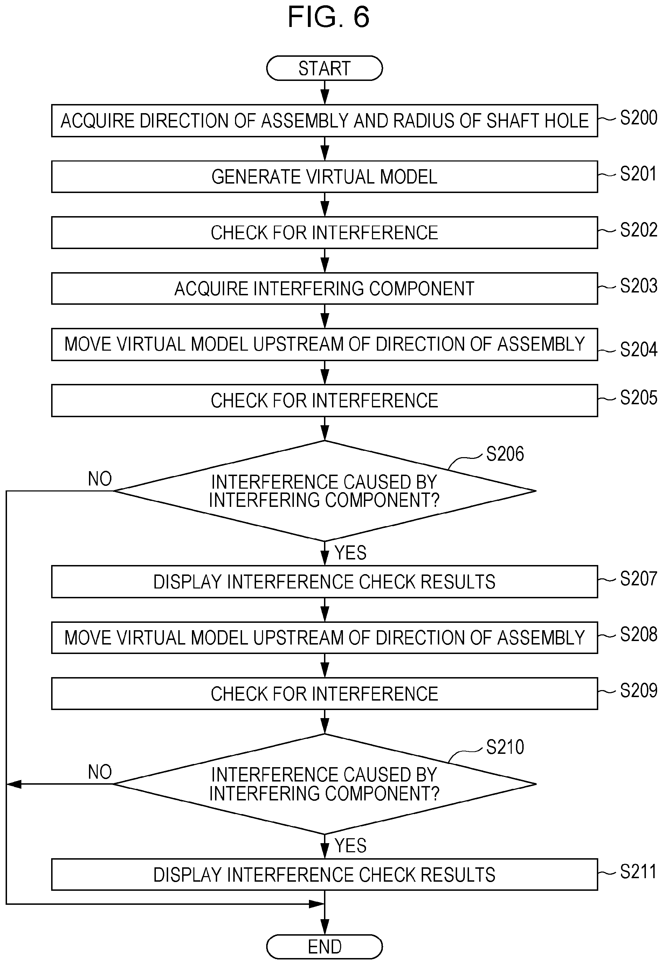

Fig. 6 is a flowchart illustrating an example of a flow of a process that determines whether an assembly distance of the gear 100 is appropriate. The process in Fig. 6 is performed each time the gear 100 is assembled in accordance with the 3D CAD data. The order of assembly of each component is separately obtained from the assembly information data. The design support apparatus 10 performs a process of assembling components in the order of assembly. When the gear 100 is to be assembled, the design support apparatus 10 performs the process in Fig. 6.

In step S200 in Fig. 6, the CPU 11 in the design support apparatus 10 retrieves from the storage 14 the direction of assembly Y of the gear 100 and the radius of the shaft hole 101 determined in accordance with Fig. 2. The CPU 11 proceeds to step S201.

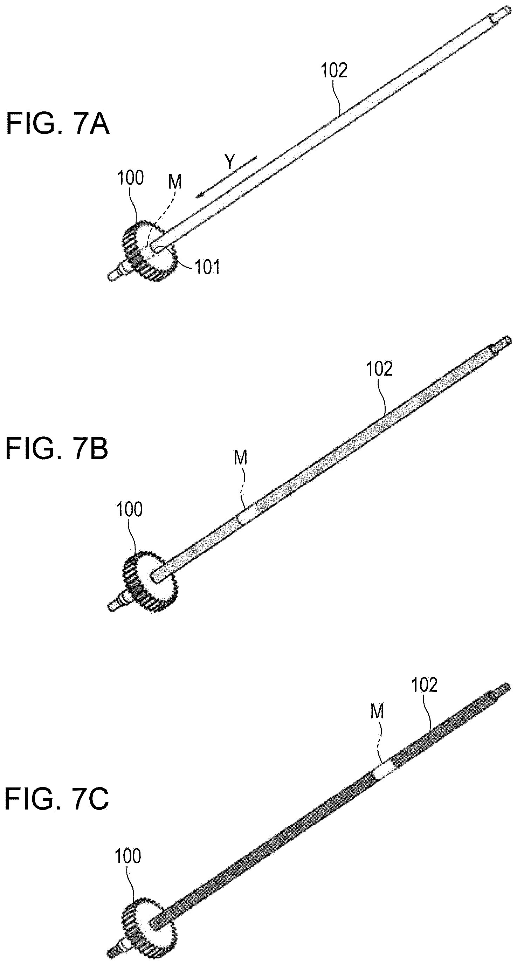

In step S201, the CPU 11 in the design support apparatus 10 generates the virtual model M that is smaller than the inner diameter of the shaft hole 101 by a predetermined size on the 3D CAD data and places the virtual model M in the shaft hole 101 of the gear 100. According to the exemplary embodiment, the CPU 11 generates a cylindrical virtual model M having a radius equal to (a radius of the shaft hole 101 of the gear 100 - 1 mm). Such virtual model M is smaller in radius than the rotary shaft 102 to be inserted into the shaft hole 101 and is thus interfered with the rotary shaft 102 to be inserted into the shaft hole 101. Fig. 7A illustrates a state in which the virtual model M smaller than the inner diameter of the shaft hole 101 by a predetermined size and placed in the shaft hole 101 of the gear 100. The CPU 11 proceeds to step S202.

In step S202, the CPU 11 in the design support apparatus 10 performs interference check to determine whether a component interferes with the virtual model M. The interference check is performed by determining whether the virtual model M is located at a position that overlaps another component. The CPU 11 proceeds to step S203.

In step S203, the CPU 11 in the design support apparatus 10 acquires another component that is determined to interfere with the virtual model M through the interference check in step S202 (hereinafter referred to as an "interfering component"). Typically, the rotary shaft 102 to be inserted into the shaft hole 101 of the gear 100 is acquired as an interfering component. The CPU 11 proceeds to step S204.

In step S204, the CPU 11 in the design support apparatus 10 moves the virtual model M generated in step S201 to an upstream side in the direction of assembly Y of the gear 100, specifically, by a predetermined distance, for example, by 100 mm, from the gear 100 in a reverse direction in the direction of assembly Y. The CPU 11 proceeds to step S205.

In step S205, the CPU 11 in the design support apparatus 10 performs interference check to determine whether another component interferes with the virtual model M. The CPU 11 proceeds to step S206.

In step S206, the CPU 11 in the design support apparatus 10 determines whether the results of the interference check performed in step S205 indicate interference by the interfering component acquired in step S203. If the results indicate the interference by the interfering component, the CPU 11 proceeds to step S207. If the results do not indicate any interference by the interfering component, the process ends.

In step S207, the CPU 11 in the design support apparatus 10 displays the interference check results on the display 16. Specifically, the CPU 11 displays the component determined to interfere with the virtual model M and the component not determined to interfere with the virtual model M in different display forms on the 3D CAD data. The component determined to interfere with the virtual model M and the component not determined to interfere with the virtual model M are displayed in different colors as the different display forms. Specifically, only the interfering component changes in color on the 3D CAD data. Referring to Fig. 7B, the color of the rotary shaft 102 serving as the interfering component is changed from the state illustrated in Fig. 7A. The CPU 11 proceeds to step S208.

In step S208, the CPU 11 in the design support apparatus 10 further moves the virtual model M moved in step S204 toward the upstream side in the direction of assembly Y of the gear 100 by a predetermined distance, for example, 150 mm. The virtual model M thus has moved from the gear 100 by a total of 250 mm. The CPU 11 proceeds to step S209.

In step S209, the CPU 11 in the design support apparatus 10 performs interference check to determine whether another component interferes with the virtual model M. The CPU 11 proceeds to step S210.

In step S210, the CPU 11 in the design support apparatus 10 determines whether the results of the interference check performed in step S209 indicate the interference by the interfering component acquired in step S203. If the results indicate the interference by the interfering component, the process proceeds to step S211. On the other hand, if the results do not indicate any interference by the interfering component, the process ends.

In step S211, the CPU 11 in the design support apparatus 10 displays the interference check results on the display 16. Specifically, the component H determined to interfere with the virtual model M and the component not determined to interfere with the virtual model M are displayed in different display forms. The component H determined to interfere with the virtual model M and the component not determined to interfere with the virtual model M are displayed in different colors as the different display forms. The displaying herein is performed in colors different from the colors of the results of the interference check performed in step S207. Referring to Fig. 7C, the rotary shaft 102 serving as the interfering component is displayed in a color different from the color in the state illustrated Fig. 7B. If the interfering component H interferes with the virtual model M, the virtual model M may be displayed in a color different from a color applied when the component H does not interfere with the virtual model M. The interference check results are stored. The process thus ends.

The design engineer may perform design changes in accordance with the interference check results. For example, the design engineer may study the possibility of shortening the rotary shaft 102 or modifying the location of the gear 100.

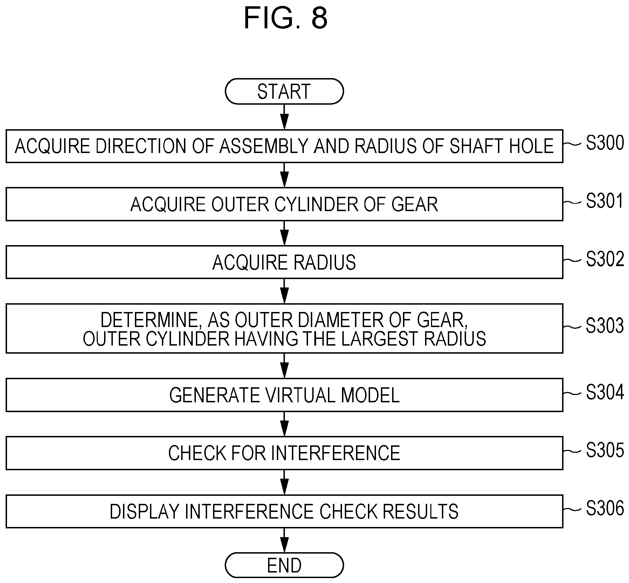

Fig. 8 is a flowchart illustrating an example of a flow of a process that, when the gear 100 is assembled, determines whether there is a component that interferes with the passage of entrance of the gear 100 and whether work space is secured. The process in Fig. 8 is performed each time the gear 100 is assembled in accordance with the 3D CAD data. The order of assembly of each component is separately obtained from the assembly information data. The design support apparatus 10 performs a process of assembling components in the order of assembly. When the gear 100 is to be assembled, the design support apparatus 10 performs the process in Fig. 8.

In step S300 in Fig. 8, the CPU 11 in the design support apparatus 10 retrieve from the storage 14 the direction of assembly Y and the radius of the shaft hole 101 of the gear 100 determined in Fig. 2. The CPU 11 proceeds to step S301.

In step S301, the CPU 11 in the design support apparatus 10 acquires an outer cylinder 105 (outer circumference of the cylinder) of the gear 100. According to the exemplary embodiment, the image of the gear 100 is recognized and all portions of the outer cylinder 105 are acquired. The CPU 11 proceeds to step S302.

In step S302, the CPU 11 in the design support apparatus 10 acquires the radius of the outer cylinder 105 extracted in step S301. According to the exemplary embodiment, the length of the radius of the outer cylinder 105 is measured on the 3D CAD data and then acquired. The CPU 11 proceeds to step S303.

In step S303, the CPU 11 in the design support apparatus 10 recognizes, as the outer diameter of the gear 100, the outer cylinder 105 having the largest radius, out of the outer cylinders 105 acquired in step S302. The exemplary embodiment is not limited to measuring the length of the radius of the outer cylinder 105 on the 3D CAD data. Alternatively, data on each element, such as the length of the diameter of each element on the 3D CAD data may be stored and the data on the length of the external diameter may then be retrieved. The CPU 11 proceeds to step S304.

In step S304, the CPU 11 in the design support apparatus 10 generates a virtual model M having a predetermined size on the 3D CAD data and places the generated virtual model M in the direction of assembly Y of the gear 100. The generated cylindrical virtual model M has a radius equal to the "radius of the gear 100 + 15 mm," is twice as high as the gear 100, and has a hole as large as "the shaft hole + 1 mm." Since such virtual model M has a hole larger than the diameter of the rotary shaft 102 that is to be inserted into the shaft hole 101, the rotary shaft 102 does not interfere with the virtual model M. The virtual model M is sized in view of space that receives the gear 100 and space that receives a finger of a worker or a tool when the gear 100 is assembled. The CPU 11 proceeds to step S305.

In step S305, the CPU 11 in the design support apparatus 10 performs interference check to determine whether a component interferes with the virtual model M. The CPU 11 proceeds to step S306.

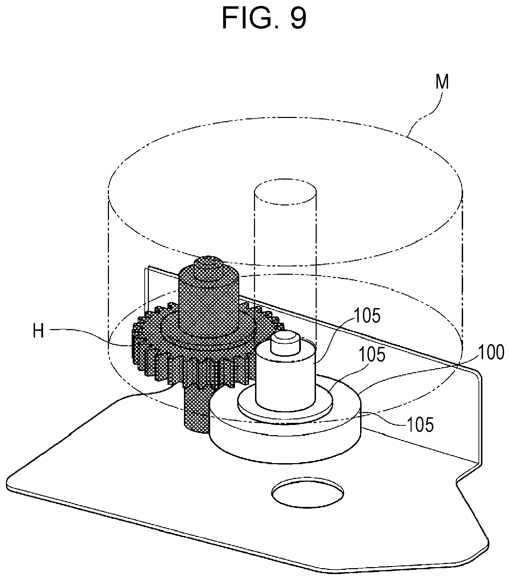

In step S306, the CPU 11 in the design support apparatus 10 displays the interference check results on the display 16. Specifically, the component H determined to interfere with the virtual model M and the component not determined to interfere with the virtual model M are displayed in different display forms on the 3D CAD data. The component H determined to interfere with the virtual model M and the component not determined to interfere with the virtual model M are displayed in different colors as the different display forms. Specifically, only the component H determined to interfere with the virtual model M changes in color on the 3D CAD data. Referring to Fig. 9, the component H determined to interfere with the virtual model M and the component not determined to interfere with the virtual model M are displayed in different colors. The data on the interfering component H is stored on the storage 14. The exemplary embodiment is not limited to the case in which the component H determined to interfere with the virtual model M and the component not determined to interfere with the virtual model M are displayed in different colors. Alternatively, the gear 100 may be displayed in a color different from a color applied when there is no component H interfering with the virtual model M. The interference check results are stored. The process thus ends.

Another component that is engaged with the teeth of the gear 100 and determined to interfere with the gear 100 may be displayed in a display form different from a display form of a component that is not determined to interfere with the gear 100. Specifically, the gear 100 is supposed to engage with one of the components. The engagement component, if determined to be interfere with the gear 100, has less necessity to be displayed in a different display form. The engagement component may thus be displayed in the same display form as the display form of the component that is not determined to interfere with the gear 100.

The design engineer may perform design changes in accordance with the interference check results. For example, the design engineer may modify the mounting position of the gear 100 or the interfering component H.

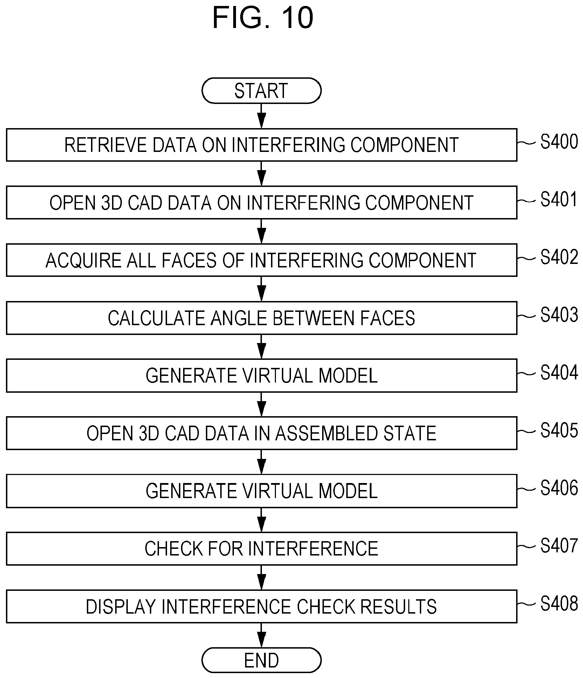

Fig. 10 is a flowchart illustrating an example of a flow of a process that, when the gear 100 is assembled, determines whether there is a possibility that a worker is hurt. The process in Fig. 10 is performed each time the gear 100 is assembled in accordance with the 3D CAD data. The order of assembly of each component is separately obtained from the assembly information data. The design support apparatus 10 performs a process of assembling components in the order of assembly. When the gear 100 is to be assembled, the design support apparatus 10 performs the process in Fig. 10.

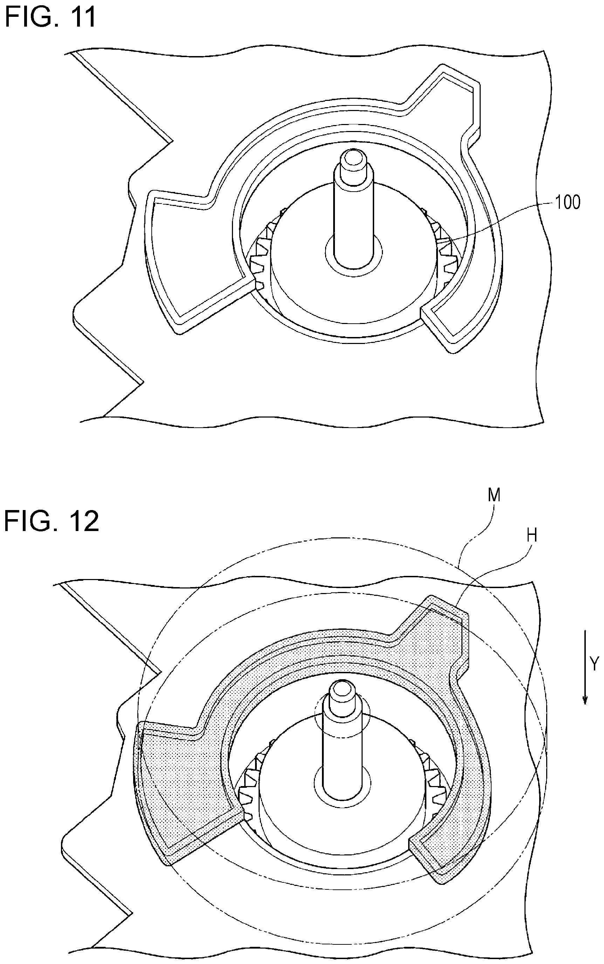

In step S400 in Fig. 10, the CPU 11 in the design support apparatus 10 retrieves from the storage 14 data on the interfering component H determined in the process similar to the process in Fig. 8. In the following discussion simpler than the discussion with reference to Fig. 8, the gear 100 is acquired as illustrated in Fig. 11. Referring to Fig. 12, the virtual model M having a predetermined size is generated and placed in the direction of assembly Y of the gear 100. The CPU 11 performs interference check and displays the interference check results. The CPU 11 proceeds to step S401.

In step S401, the CPU 11 in the design support apparatus 10 opens the 3D CAD data on the interfering component H acquired in step S400. The CPU 11 proceeds to step S402.

In step S402, the CPU 11 in the design support apparatus 10 acquires all faces of the interfering component H. The acquisition is performed by recognizing a portion that is flat on the 3D CAD data. The CPU 11 proceeds to step S403.

In step S403, the CPU 11 in the design support apparatus 10 calculates an angle between the faces acquired in step S102. The CPU 11 proceeds to step S404.

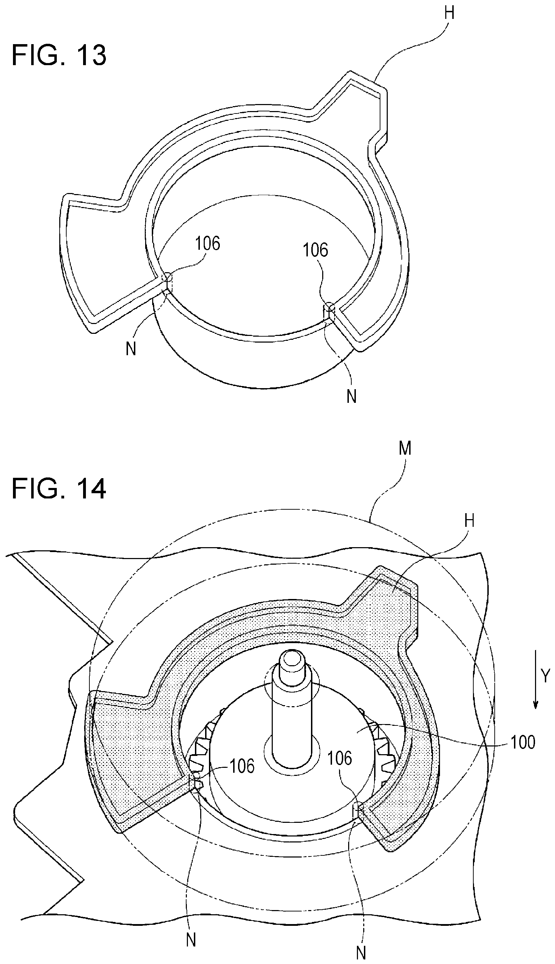

In step S404, the CPU 11 in the design support apparatus 10 generates and places cylindrical virtual indexes N at edge portions 106, each having a predetermined angle, for example, less than 90 degrees in the exemplary embodiment. In the exemplary embodiment, the cylindrical index N has a radius of 2 mm as illustrated in Fig. 13 and covers the edge portion 106 of the interfering component H. The size of the virtual index N is not limited to the size illustrated herein. The CPU 11 proceeds to step S405.

In step S405, the CPU 11 in the design support apparatus 10 opens the 3D CAD data on the gear 100 in the assembled state in which the interfering component H with the virtual index N is built in. The CPU 11 proceeds to step S406.

In step S406, the CPU 11 in the design support apparatus 10 generates a virtual model M identical to the virtual model M generated in step S304 in Fig. 8 and places the virtual model M in the direction of assembly Y of the gear 100. The virtual model M has a size equal to the outer diameter of the gear 100 + 15 mm, is twice as high as the height of the gear 100, and has a hole having the diameter of the shaft hole of the gear 100 + 1 mm. The virtual model M is sized in view of space that receives the gear 100 and space that receives a finger of a worker or a tool when the gear 100 is assembled. The CPU 11 proceeds to step S407.

In step S407, the CPU 11 in the design support apparatus 10 performs interference check to determine whether the cylindrical virtual index N generated in step S404 interferes with the virtual model M generated in step S406. The interference check may be performed by determining whether the virtual model M is at a position that overlaps the virtual index N on the 3D CAD data. The CPU 11 proceeds to step S408.

In step S408, the CPU 11 in the design support apparatus 10 displays the interference check results on the display 16. Specifically, the CPU 11 displays the virtual index N on the 3D CAD data. The CPU 11 also displays in different display forms the component H having the edge portion 106 with an interfering acute angle and a component having no edge portion with an interfering acute angle. The component H having the edge portion 106 with the interfering acute angle and the component having no edge portion with the interfering acute angle are displayed in different colors as the different display forms. Specifically, only the component having the edge portion with the acute angle changes in color on the 3D CAD data. Fig. 14 illustrates a state in which the interfering component H is displayed in a color different from a color of other components. The exemplary embodiment is not limited to the case in which the component H having the edge portion 106 with the interfering acute angle and the component having no edge portion with the interfering acute angle are displayed in different colors. Alternatively, the gear 100 may be displayed in a color different from a color applied when there is no component H having the interfering edge. The interference check results are stored. The process thus ends.

The design engineer may perform design changes in accordance with the interference check results. For example, the design engineer may chamfer the edge portion 106 having an acute angle.

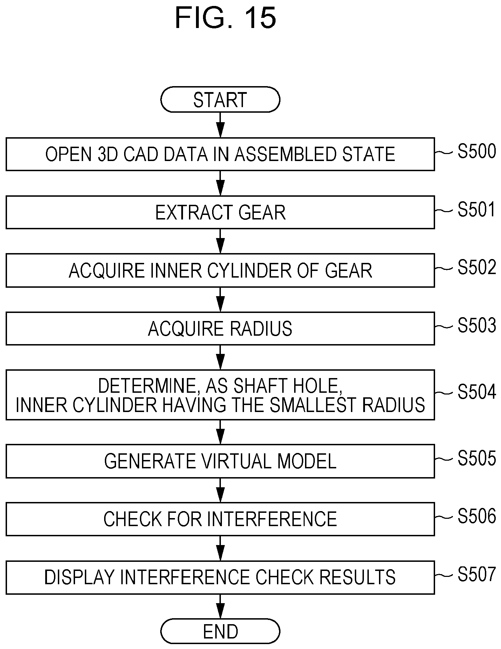

Fig. 15 is a flowchart illustrating an example of a flow of a process that, when the gear 100 is assembled, determines whether there is a possibility that the gear 100 falls. The process in Fig. 15 is performed each time workers change after the gear 100 is assembled. Assembling the components may be typically performed in an assembly line by multiple workers. When an assembly process is taken over by another worker after the gear 100 is assembled, there is a possibility that the gear 100 falls off if the gear 100 is not secured. The design support apparatus 10 performs the assembly process to assemble the components in order. When workers change after the gear 100 is assembled, the design support apparatus 10 performs the process in Fig. 15.

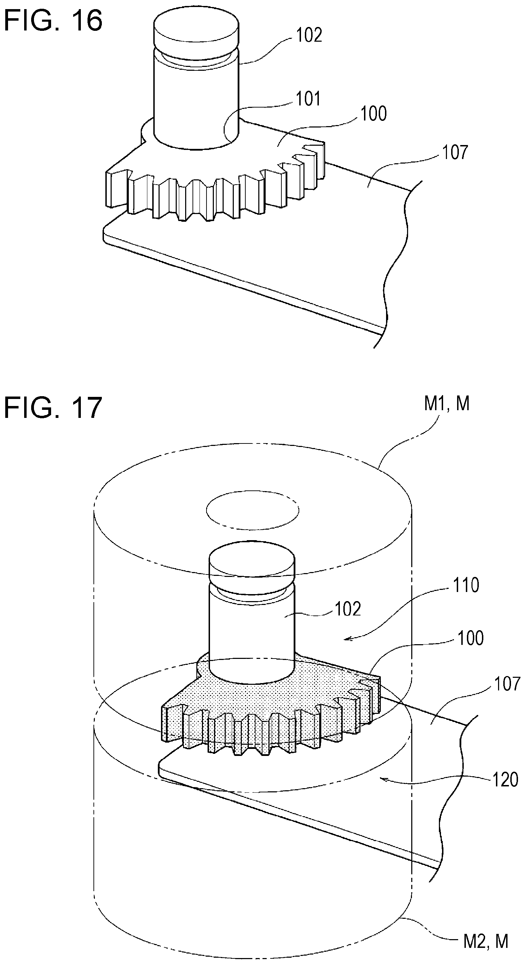

In step S500 in Fig. 15, the CPU 11 in the design support apparatus 10 retrieves from the storage 14 the 3D CAD data that includes a combination of components after the gear 100 is assembled and the CPU 11 opens the 3D CAD data. Fig. 16 illustrates part of the opened 3D CAD data, specifically, illustrates the gear 100, rotary shaft 102 that is to be inserted into the shaft hole 101 of the gear 100, and plate 107 supporting the rotary shaft 102. The CPU 11 then proceeds to step S501.

In step S501, the CPU 11 in the design support apparatus 10 extracts the gear 100 from the 3D CAD data. The extraction is performed via the image recognition that determines whether the gear 100 matches in shape the gear 100 predetermined by the 3D CAD data. The exemplary embodiment is not limited to the extraction of the gear 100 via the image recognition. Alternatively, information indicating that a component defined by the 3D CAD data is the gear 100 may be stored and the component corresponding to the information may be retrieved as the gear 100. The CPU 11 proceeds to step S502.

In step S502, the CPU 11 in the design support apparatus 10 acquires an inner cylinder 103 (hollow cylinder) of the gear 100 extracted in step S501. According to the exemplary embodiment, the image of the gear 100 is recognized and all portions of the inner cylinder 103 are acquired. The CPU 11 proceeds to step S503.

In step S503, the CPU 11 in the design support apparatus 10 acquires the radius of the inner cylinder 103 extracted in step S502. According to the exemplary embodiment, the length of the radius of the inner cylinder 103 is acquired through measuring on the 3D CAD data. The exemplary embodiment is not limited to measuring the radius of the inner cylinder 103 on the 3D CAD data. Alternatively, data on each portion, such as the length of the radius of the component on the 3D CAD data, may be stored and then retrieved. The CPU 11 proceeds to step S504.

In step S504, the CPU 11 in the design support apparatus 10 recognizes, as the shaft hole 101 of the gear 100, the inner cylinder 103 having the smallest radius, out of the inner cylinders acquired in step S503. In addition, the height of the gear 100 may be measured from the shaft hole 101 and the height of the recognized inner cylinder 103. The CPU 11 proceeds to step S505.

In step S505, the CPU 11 in the design support apparatus 10 generates virtual models M, each of which is larger than by a predetermined size than the inner diameter of the shaft hole 101 on the 3D CAD data. The CPU 11 places the virtual models M on the upper side 110 and the lower side 120 in the axial direction of the shaft hole 101 of the gear 100. According to the exemplary embodiment, cylindrical virtual models M generated on the upper side 110 and the lower side 120 in the axial direction of the shaft hole 101 of the gear 100 have a diameter of 90% of the diameter of the gear 100, are twice as high as the height of the gear 100, and have a hole equal to the hole of the gear 100 + 1 mm. In other words, the virtual model M has a diameter larger than the diameter (inner diameter) of the rotary shaft 102 that is inserted into the shaft hole 101. The virtual models M is so sized that the rotary shaft 102 does not interfere with the virtual model M if the virtual model M covers the rotary shaft 102. The virtual model M is thus placed to cover the external face of the rotary shaft 102. The virtual model M is not limited to the sizes described above. If the height of the gear 100 is not measured, the virtual model M may not necessarily be twice as high as the gear 100. Fig. 17 illustrates a virtual model M1 generated on the upper side 110 in the axial direction of the gear 100 and a virtual model M2 generated on the lower side 120. The CPU 11 proceeds to step S506.

In step S506, the CPU 11 in the design support apparatus 10 performs interference check to determine whether any component interferes with the virtual model M generated in step S505. The interference check is performed by determining whether the virtual model is located at a position that overlaps another component on the 3D CAD data. The CPU 11 proceeds to step S507.

In step S507, the CPU 11 in the design support apparatus 10 displays the interference check results obtained in step S506 on the display 16. Specifically, if none of components are determined to interfere with the virtual models M generated on the upper side 110 and lower side 120 in the axial direction of the gear 100 on the 3D CAD data, the gear 100 is displayed in a different display form. Specifically, if none of the components interfere with the virtual models M, the gear 100 changes in color on the 3D CAD data. Referring to Fig. 17, since none of the components interfere with the virtual model M1 on the upper side 110 in the axial direction, the gear 100 is displayed in a different color. The interference check results are stored. The process thus ends.

The design engineer may perform design changes in accordance with the interference check results. For example, after the gear 100 is secured the design engineer may shift to a step where workers changes.

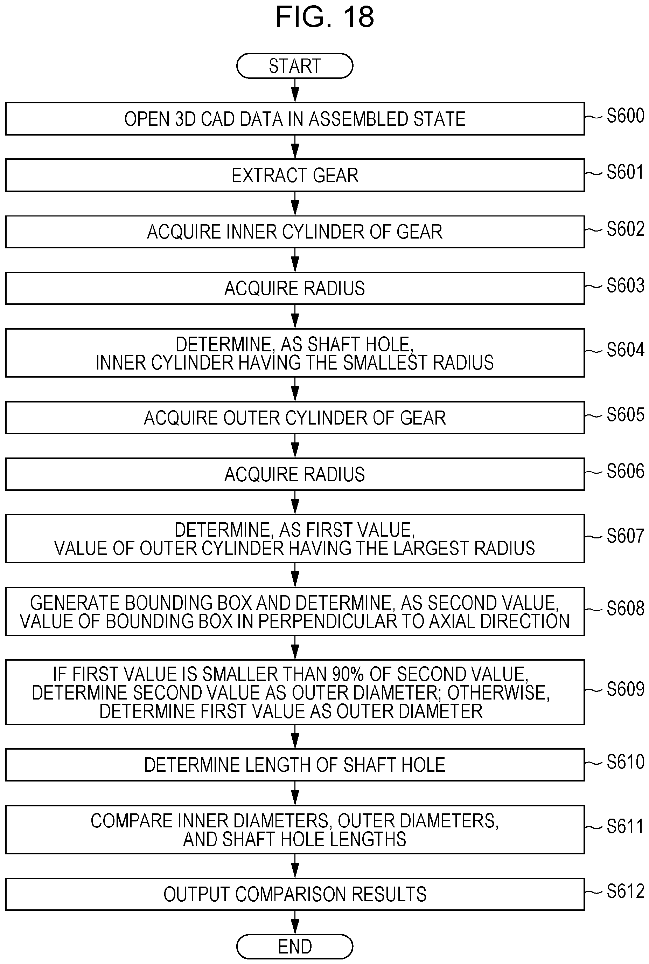

Fig. 18 is a flowchart illustrating an example of a flow of a process that determines whether there is a possibility that the gear 10 is assembled at an incorrect position in an assembly process. The process in Fig. 18 is performed each time the gear 100 is assembled in accordance with the 3D CAD data. The order of assembly of each component is separately obtained from the assembly information data. The design support apparatus 10 performs a process of assembling components in the order of assembly. When the gear 100 is to be assembled, the design support apparatus 10 performs the process in Fig. 18.

In step S600 in Fig. 18, the CPU 11 in the design support apparatus 10 retrieves from the storage 14 the 3D CAD data that includes a combination of components after the gear 100 is assembled and the CPU 11 opens the 3D CAD data. The CPU 11 then proceeds to step S601.

In step S601, the CPU 11 in the design support apparatus 10 extracts the gear 100 from the 3D CAD data. The extraction is performed via the image recognition that determines whether the gear 100 matches in shape the gear 100 predetermined by the 3D CAD data. The exemplary embodiment is not limited to the extraction of the gear 100 via the image recognition. Alternatively, information indicating that a component defined by the 3D CAD data is the gear 100 may be stored and the component corresponding to the information may be retrieved as the gear 100. The CPU 11 proceeds to step S602.

In step S602, the CPU 11 in the design support apparatus 10 acquires an inner cylinder 103 (hollow cylinder) of the gear 100 extracted in step S601. According to the exemplary embodiment, the image of the gear 100 is recognized and all portions of the inner cylinder 103 are acquired. The CPU 11 proceeds to step S603.

In step S603, the CPU 11 in the design support apparatus 10 acquires the radius of the inner cylinder 103 extracted in step S602. According to the exemplary embodiment, the length of the radius of the inner cylinder 103 is acquired through measuring on the 3D CAD data. The exemplary embodiment is not limited to measuring the radius of the inner cylinder 103 on the 3D CAD data. Alternatively, data on each portion, such as the length of the radius of a component on the 3D CAD data, may be stored and then retrieved. The CPU 11 proceeds to step S604.

In step S604, the CPU 11 in the design support apparatus 10 recognizes, as the shaft hole 101 of the gear 100, the inner cylinder 103 having the smallest radius, out of the inner cylinders acquired in step S603. The CPU 11 proceeds to step S605.

In step S605, the CPU 11 in the design support apparatus 10 acquires an outer cylinder 105 of the gear 100. According to the exemplary embodiment, the image of the gear 100 is recognized and all portions of the outer cylinder 105 are acquired. The CPU 11 proceeds to step S606.

In step S606, the CPU 11 in the design support apparatus 10 acquires the radius of the outer cylinder 105 extracted in step S604. According to the exemplary embodiment, the length of the radius of the outer cylinder 105 is measured and acquired on the 3D CAD data. The CPU 11 proceeds to step S607.

In step S607, the CPU 11 in the design support apparatus 10 determines, as a first value, the value of the outer cylinder 105 having the largest radius, out of the outer cylinders 105 acquired in step S302. The CPU 11 proceeds to step S608.

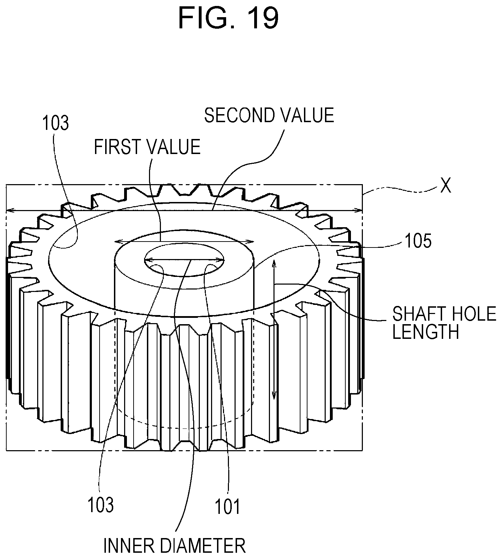

In step S608, the CPU 11 in the design support apparatus 10 generates a rectangular bounding box X surrounding the minimum range of the gear 100 on the 3D CAD data as illustrated in Fig. 19, and determines as a second value the value of a bounding box perpendicular to the axial direction of the shaft hole 101. The CPU 11 proceeds to step S609.

In step S609, the CPU 11 in the design support apparatus 10 compares the first value determined in step S607 with the second value determined in step S608. If the first value is smaller than 90% of the second value, the CPU 11 determines the second value as the outer diameter of the design support apparatus 10; otherwise, the CPU 11 determines the first value as the outer diameter of the gear 100. Since the gear 100 illustrated in Fig. 19 has a toothed outer circumference rather than a cylindrical outer circumference, it is difficult to acquire the value of the diameter of the outer cylinder. For this reason, the value of one bounding box perpendicular to the axial direction of another bounding box is determined as an outer diameter. The exemplary embodiment is not limited to measuring the outer diameter using the bounding box X. Alternatively, data on each portion, such as the length of the outer diameter, may be stored as the 3D CAD data and the stored data may then be retrieved. The CPU 11 proceeds to step S610.

In step S610, the CPU 11 in the design support apparatus 10 acquires data on an inner cylinder (edge list of the shaft hole) acquired in step S603 and used to determine the shaft hole in step S604, calculates a distance in the axial direction between curved edges included in the data, and determines the longest distance as the length of the shaft hole. The exemplary embodiment is not limited to measuring the length of the shaft hole on the 3D CAD data. Alternatively, data on each portion, such as the length of the shaft hole, may be stored as the 3D CAD data and the data on the length of the shaft hole may be retrieved. The CPU 11 proceeds to step S611.

In step S611, the CPU 11 in the design support apparatus 10 performs operations from step S602 to step S610 on each of the gears included in the 3D CAD data in a completed state, and compares acquired inner diameters, outer diameters, and lengths of the shaft holes. The CPU 11 proceeds to step S612.

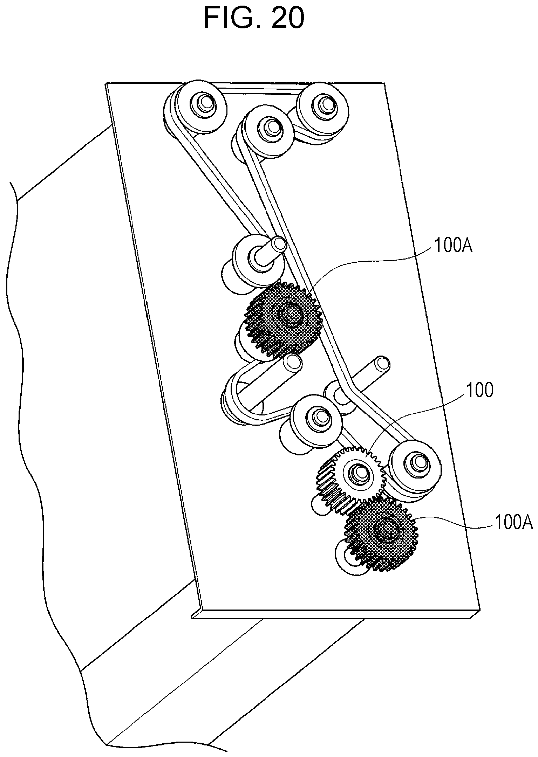

In step S612, the CPU 11 in the design support apparatus 10 outputs comparison results obtained in step S611. Specifically, the CPU 11 extracts a gear 100A that is in a similarity range. The similarity range indicates that the inner diameter, outer diameter, and length of the shaft hole are within respective predetermined ranges. The CPU 11 changes the gear 100A in color. The predetermined range indicates that the inner diameter, outer diameter, and length of the shaft hole are respectively from 0.8 times the inner diameter, outer diameter, and length of the shaft hole of the gear 100 to 1.2 times the inner diameter, outer diameter, and length of the shaft hole of the gear 100. The predetermined range is not limited from 0.8 times to 1.2 times. Fig. 20 illustrates the state in which the gear 100A determined to fall within the similarity range of the gear 100 is displayed in a color different from a color of the gear 100. The comparison results are stored.

The design engineer may perform design changes in accordance with the interference check results. For example, the design engineer may modify the gear 100A within in the similarity range in terms of size and/or color, or add a caution statement to an assembly manual for workers.

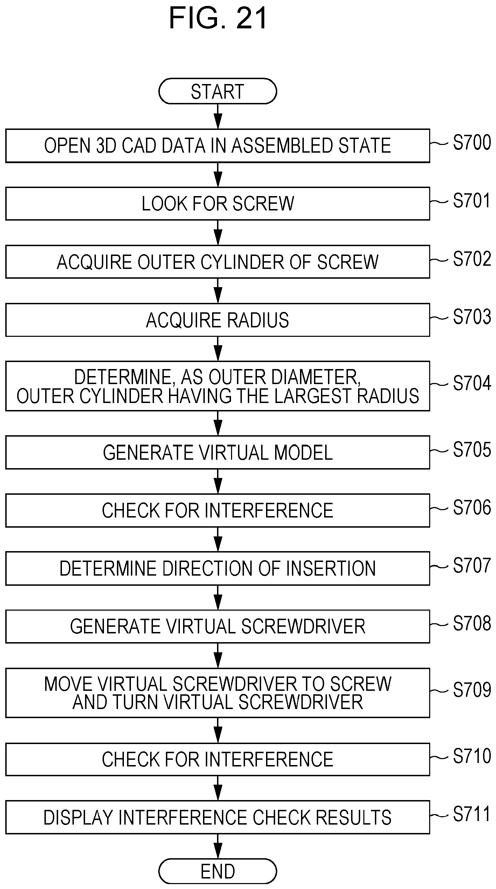

Fig. 21 is a flowchart illustrating an example of a flow of a process that, when the screw 200 is assembled, determines whether there is any component interfering with a passage of entrance of a screw 200 and whether work space is secured. The process in Fig. 21 is performed each time the screw 200 is assembled in accordance with the 3D CAD data. The order of assembly of each component is separately obtained from the assembly information data. The design support apparatus 10 performs a process of assembling components in the order of assembly. When the screw 200 is to be assembled, the design support apparatus 10 performs the process in Fig. 21.

In step S700 in Fig. 21, the CPU 11 in the design support apparatus 10 retrieves from the memory 14 the 3D CAD data that is related to a combination of components after the screw 200 is assembled and opens the 3D CAD data. The CPU 11 proceeds to step S701.

In step S701, the CPU 11 in the design support apparatus 10 extracts the screw 200 from the 3D CAD data. The extraction is performed via the image recognition that determines whether the screw 200 matches in shape the screw 200 predetermined by the 3D CAD data. The exemplary embodiment is not limited to the extraction of the screw 200 via the image recognition. Alternatively, information indicating that a component defined by the 3D CAD data is the screw 200 may be stored and the component corresponding to the information may be retrieved as the screw 200. The CPU 11 proceeds to step S702.

In step S702, the CPU 11 in the design support apparatus 10 acquires an outer cylinder of the screw 200 extracted in step S701. According to the exemplary embodiment, the image of the screw 200 is recognized and all portions of the outer cylinder are acquired. The CPU 11 proceeds to step S703.

In step S703, the CPU 11 in the design support apparatus 10 acquires the radius of the outer cylinder extracted in step S702. According to the exemplary embodiment, the length of the radius of the outer cylinder is acquired through measuring on the 3D CAD data. The CPU 11 proceeds to step S704.

In step S704, the CPU 11 in the design support apparatus 10 recognizes, as an external diameter of the screw 200, the outer cylinder having the largest radius, out of the outer cylinders acquired in step S703. The exemplary embodiment is not limited to measuring the length of the radius of the outer cylinder on the 3D CAD data. Alternatively, data of each component, such as the length of the outer diameter may be stored as the 3D CAD data and the data on the length of the diameter may be retrieved. The CPU 11 proceeds to step S705.

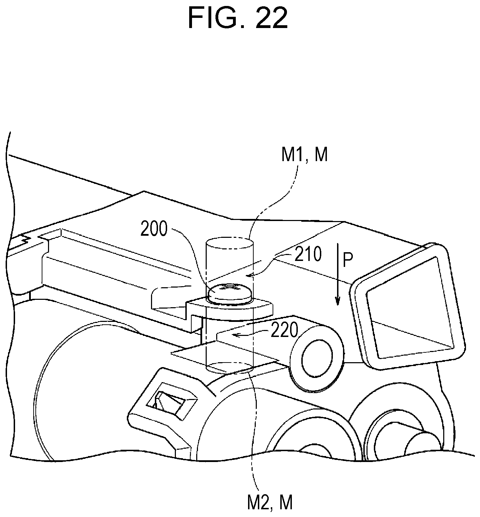

In step S705, the CPU 11 in the design support apparatus 10 generates on the 3D CAD data virtual models M having a predetermined size and places the virtual models M on an upper side 210 and a lower side 220 in an axial direction of the screw 200 perpendicular to the diameter of the screw 200. According to the exemplary embodiment, the virtual model M generated is a cylinder having a diameter as long as the length of the diameter of the screw 200 and a height of 5 mm. The virtual model M is not limited to the size described above. Fig. 22 illustrates a virtual model M1 generated on the upper side 210 in the axial direction of the screw 200 and a virtual model M2 on the lower side 220 in the axial direction of the screw 200. The CPU 11 proceeds to step S706.

In step S706, the CPU 11 in the design support apparatus 10 performs interference check to determine whether any component interferes with the virtual model M. The interference check is performed by determining whether the virtual model M is located at a position that overlaps another component on the 3D CAD data. The CPU 11 proceeds to step S707.

In step S707, the CPU 11 in the design support apparatus 10 determines a direction of insertion of the screw 200 from results of the interference check in step S706. Specifically, a side of the virtual model M that is not interfered with any other component is determined to be the direction of insertion. Specifically, if the virtual model M1 generated on the upper side 210 of the screw 200 is interfered with any component and the virtual model M2 generated on the lower side 220 of the screw 200 is not interfered with a component, the CPU 11 determines that the lower side 220 is the direction of insertion of the screw 200. On the other hand, if the virtual model M1 generated on the upper side 210 of the screw 200 is not interfered with any other component and the virtual model M2 generated on the lower side 220 of the screw 200 is interfered with a component, the CPU 11 determines that the upper side 210 is the direction of insertion of the screw 200. Fig. 22 illustrates the state in which the virtual model M1 placed on the upper side 210 of the screw 200 is free from interference and the virtual model M2 generated on the lower side 220 of the screw 200 is interfered with another component. Referring to Fig. 22, the upper side 210 is determined to be the direction of insertion P. The CPU 11 proceeds to step S708.

In step S708, the CPU 11 in the design support apparatus 10 generates on the 3D CAD data a virtual model M as a screwdriver (virtual screwdriver MA) that is used to assemble the screw 200 in the direction of insertion P determined in step S707. The CPU 11 places the virtual screwdriver MA in the direction of insertion P. A grip portion MB of the virtual screwdriver MA may be sized in view of a size of a hand of a worker who may grip the virtual screwdriver MA. The CPU 11 proceeds to step S709.

In step S709, the CPU 11 in the design support apparatus 10 moves the tip MC of the virtual screwdriver MA generated in step S708 to the screw 200 and turns the virtual screwdriver MA to tighten the screw 200. The CPU 11 proceeds to step S710.

In step S710, the CPU 11 in the design support apparatus 10 performs interference check to determine whether the virtual screwdriver MA is interfered with another component. The CPU 11 proceeds to step S711.

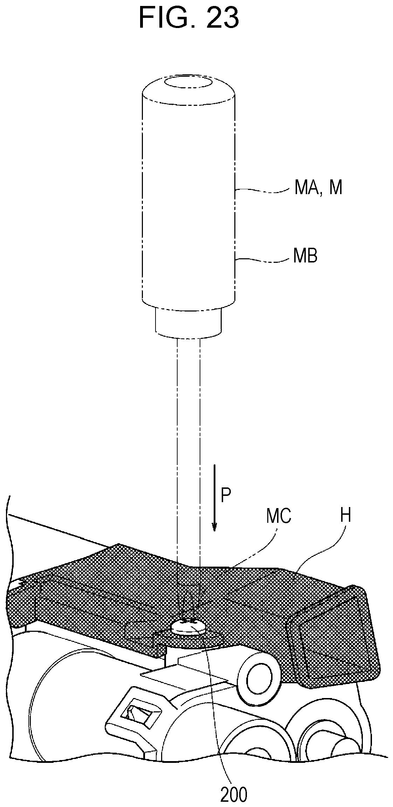

In step S711, the CPU 11 in the design support apparatus 10 displays the interference check results obtained in step S710 on the display 16. Specifically, if another component H is determined to interfere with the virtual screwdriver MA, the interfering component H is displayed in a different display form. The different display form indicates that the interfering component H and non-interfering components are displayed in different colors. Specifically, only the interfering component H changes in color on the 3D CAD data. Fig. 23 illustrates a state in which the component H determined to interfere with the virtual screwdriver MA and the component not determined to interfere with the virtual screwdriver MA are displayed in different colors. The exemplary embodiment is not limited to the state in which the component H determined to interfere with the virtual screwdriver MA and the component not determined to interfere with the virtual screwdriver MA are displayed in different colors. Alternatively, the virtual screwdriver MA interfered with the interference component H may be displayed in a color different from a color applied when the virtual screwdriver MA is not interfered with the component H. If the virtual screwdriver MA is displayed in the color different from the color applied when the virtual screwdriver MA is not interfered with the interference component H, a portion of the virtual screwdriver MA interfered with the component H may be displayed in a color different from a color of the remaining portion of the virtual screwdriver MA. If the component H is determined to interfere with the virtual screwdriver MA, the screw 200 may be displayed in a color different from a color applied when the component H is not determined to interfere with the virtual screwdriver MA. The interference check results are thus stored. The process thus ends.

The design engineer may perform design changes in accordance with the interference check results. For example, the design engineer may modify the mounting position of the screw 200 or the mounting position of the interfering component H.

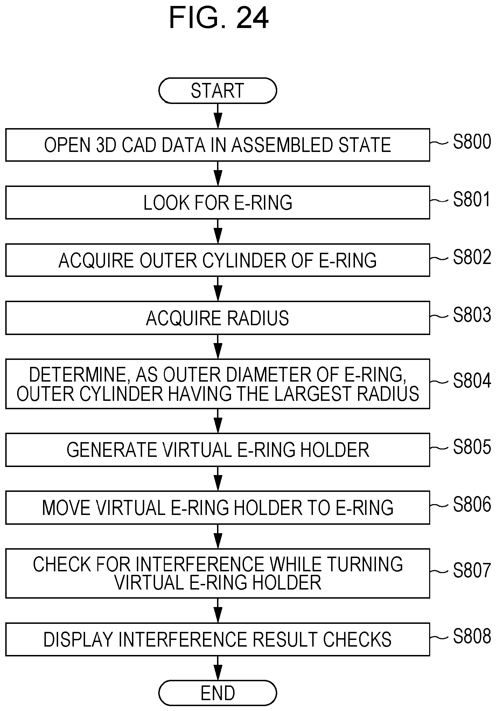

Fig. 24 is a flowchart illustrating an example of a flow of a process that, when the E-ring 300 is assembled, determines whether work space receiving an E-ring 300 is secured. The process in Fig. 24 is performed each time the E-ring 300 is assembled in accordance with the 3D CAD data. The order of assembly of each component is separately obtained from the assembly information data. The design support apparatus 10 performs a process of assembling components in the order of assembly. When the E-ring 300 is to be assembled, the design support apparatus 10 performs the process in Fig. 24.

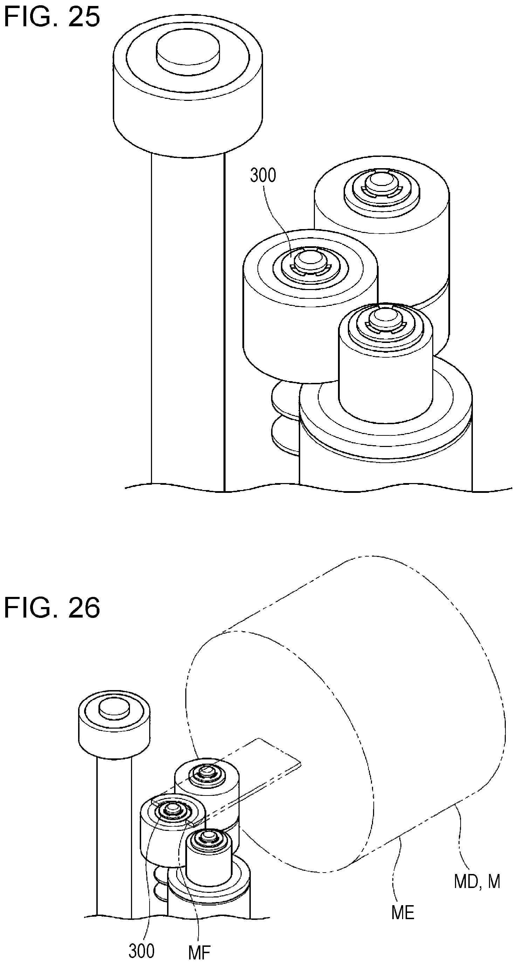

In step S800 in Fig. 24, the CPU 11 in the design support apparatus 10 retrieves from the memory 14 the 3D CAD data that is related to a combination of components after the E-ring 300 is assembled and opens the 3D CAD data. Fig. 25 is part of the open 3D CAD data and specifically illustrates the E-ring 300 inserted into a component. The CPU 11 proceeds to step S801.

In step S801, the CPU 11 in the design support apparatus 10 extracts the E-ring 300 from the 3D CAD data. The extraction is performed via the image recognition that determines whether the E-ring 300 matches in shape the E-ring 300 predetermined by the 3D CAD data. The exemplary embodiment is not limited to the extraction of the E-ring 300 via the image recognition. Alternatively, information indicating that a component defined by the 3D CAD data is the E-ring 300 may be stored and the component corresponding to the information may be retrieved as the E-ring 300. The CPU 11 proceeds to step S802.

In step S802, the CPU 11 in the design support apparatus 10 acquires an outer cylinder of the E-ring 300 extracted in step S801. According to the exemplary embodiment, the image of the E-ring 300 is recognized and all portions of the outer cylinder are acquired. The CPU 11 proceeds to step S803.

In step S803, the CPU 11 in the design support apparatus 10 acquires the radius of the outer cylinder extracted in step S802. According to the exemplary embodiment, the length of the radius of the outer cylinder is acquired through measuring on the 3D CAD data. The CPU 11 proceeds to step S804.

In step S804, the CPU 11 in the design support apparatus 10 recognizes, as an external diameter of the E-ring 300, the outer cylinder having the largest radius, out of the outer cylinders acquired in step S803. The exemplary embodiment is not limited to measuring the length of the radius of the outer cylinder on the 3D CAD data. Alternatively, data of each component, such as the length of the outer diameter may be stored as the 3D CAD data and the data on the length of the diameter may be retrieved. The CPU 11 proceeds to step S805.

In step S805, the CPU 11 in the design support apparatus 10 generates on the 3D CAD data a virtual model M of an E-ring holder MD (virtual E-ring holder MD) that is used to assemble the E-ring 300. The CPU 11 places the virtual E-ring holder MD. The size of a grip portion ME of the virtual E-ring holder MD may be sized in view of the size of a hand of a work who may grip the virtual E-ring holder MD. The CPU 11 proceeds to step S806.

In step S806, the CPU 11 in the design support apparatus 10 moves a tip MF of the virtual E-ring holder MD generated in step S805 to the side of the outer circumference of the E-ring 300. Fig. 26 illustrates the state in which the tip MF of the virtual E-ring holder MD is moved to the side of the outer circumference of the E-ring 300. The CPU 11 proceeds to step S807.

In step S807, the CPU 11 in the design support apparatus 10 engages the virtual E-ring holder MD with the side of the outer circumference of the E-ring 300, and turns the virtual E-ring holder MD in steps of a predetermined angle, for example, in steps of 15 degrees in the exemplary embodiment in order to perform interference check at each step. The interference check is to determine whether a component interferes with the virtual E-ring holder MD. The predetermined angle is not limited to 15 degrees. The CPU 11 proceeds to step S808.

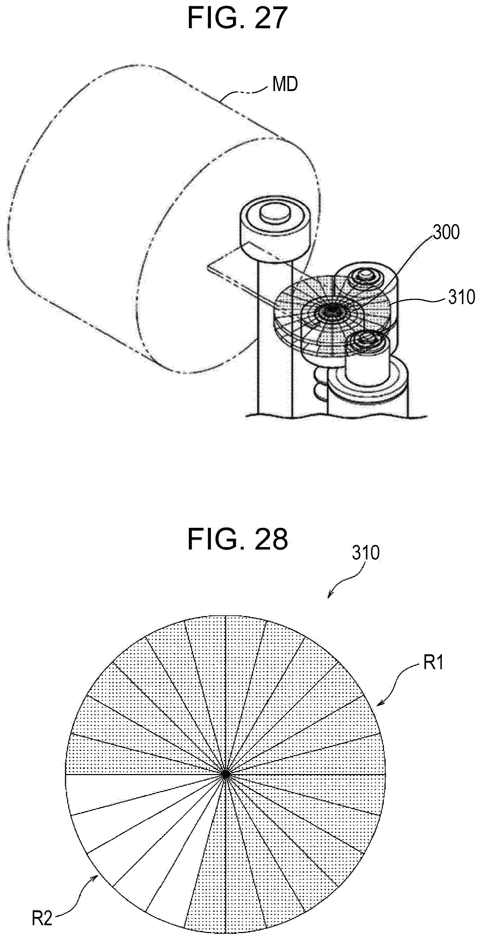

In step S808, the CPU 11 in the design support apparatus 10 displays the interference check results obtained in step S807 on the display 16. Specifically, if a component is determined to interfere with the virtual E-ring holder MD, the CPU 11 displays a virtual circle 310 in a predetermined display form that reflects the determination results. The virtual circle 310 is displayed on the E-ring 300. An angle R1 where a component interferes with the virtual E-ring holder MD and an angle R2 where a component does not interfere with the virtual E-ring holder MD are displayed in different display forms. Specifically, referring to Figs. 27 and 28, the angle R1 causing interference with a component and the angle R2 causing interference with a component are displayed in different colors. The virtual E-ring holder MD interfered with a component may be displayed in a color different from a color applied when the virtual E-ring holder MD is not interfered with any component. If the virtual E-ring holder MD interfered with the component is displayed in the color different from the color applied when the virtual E-ring holder MD is not interfered with any component, a portion of the virtual E-ring holder MD interfered with the component may be displayed in a color different from a color of the remaining portion of the virtual E-ring holder MD. Also, if the virtual E-ring holder MD determined to be interfered with a component, the E-ring 300 may be displayed in a color different from a color applied when the virtual E-ring holder MD is not interfered with any component. The interference check results are stored. The process thus ends.

The design engineer may perform design changes in accordance with the interference check results. For example, the design engineer may modify the location of assembly of the E-ring 300 or the location of component interfering with the virtual E-ring holder MD.

The disclosure is not limited to the exemplary embodiment described above. Without departing from the scope of the disclosure, a variety of changes may be made to the disclosure and the disclosure may be applied to a variety of fields.

According to the exemplary embodiment, ease of assembly of the gear 100, screw 200, and E-ring 300 is checked. The ease of assembly of other components, such as a clamp, may also be checked.

According to the exemplary embodiment, the programs are pre-stored (installed) on the ROM or memory. The disclosure is not limited to this manner. The programs may be delivered in a recorded form on one of recording media, including a compact disk read-only memory (CD-ROM), digital versatile disk read-only memory (DVD-ROM), and universal serial bus (USB) memory. Also, the programs may be downloaded from an external apparatus via a network.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. A design support apparatus comprising:
a processor configured to:
extract a component from a three-dimensional model that includes a combination of a plurality of components; and
display determination results, in a display form predetermined in the determination results, the determination results being obtained by determining whether a component other than the extracted component interferes with a virtual model, generated on the three-dimensional model, in a relationship between the virtual model and the extracted component.

2. The design support apparatus according to Claim 1, wherein the processor is configured to display, in different display forms, a first component that the determination results have determined as interfering with the virtual model and a second component that the determination results have not determined as interfering with the virtual model.

3. The design support apparatus according to Claim 2, wherein the processor is configured to display, in different colors as the different display forms, the first component determined as interfering with the virtual model and the second component not determined as interfering with the virtual model.

4. The design support apparatus according to Claim 2, wherein the processor is configured to display, in different colors as the different display forms, the extracted component having a predetermined relationship with the virtual model that the determination results have determined as being interfered with the first component and the second component that the determination results have not determined as interfering with the virtual model.

5. The design support apparatus according to Claim 1, wherein the processor is configured to display, in different colors, the virtual model determined as being interfered with a first component and a second component not determined to interfere with the virtual model.

6. The design support apparatus according to Claim 1, wherein the processor is configured to, if the virtual model is determined as being interfered with a first component, generate, on the three-dimensional model, a virtual index covering part of the first component interfering with the virtual model.

7. The design support apparatus according to any one of Claims 1 through 6, wherein the extracted component is a gear, and
wherein the processor is configured to determine whether the gear interferes with the virtual model that is larger by a predetermined size than an inner diameter of a shaft hole of the gear.

8. The design support apparatus according to Claim 7, wherein the processor is configured to set a side of the virtual model free from being interfered with to be aligned with a direction of assembly of the gear.

9. The design support apparatus according to Claim 8, wherein the processor is configured to:
place in the shaft hole of the gear the virtual model smaller than the inner diameter of the shaft hole of the gear by a predetermined size; and
if the virtual model is moved from the gear toward an upstream side in the direction of assembly by a predetermined distance, determine whether a component within the shaft hole interferes with the virtual model.

10. The design support apparatus according to any one of Claims 8 and 9, wherein the processor is configured to place the virtual model having a predetermined size in the direction of assembly to determine whether another component interferes with the virtual model.

11. The design support apparatus according to any one of Claims 1 through 10, wherein the processor is configured to, if faces of a first component determined as interfering with the virtual model are acquired and an angle made by the faces is smaller than a predetermined angle, display the first component having the angle smaller than the predetermined angle in a display form different from a display form of a second component not determined as interfering with the virtual model.

12. The design support apparatus according to any one of Claims 1 through 11, wherein the processor is configured to change a color of the extracted component if no other component is determined as interfering with one of an upper end and a lower end of the extracted component in a vertical direction in a predetermined process that assembles the components.

13. The design support apparatus according to any one of Claims 1 through 9, wherein the processor is configured to:
extract a similar component within a predetermined range of similarity with respect to the extracted component; and
change a color of the similar component.

14. A program causing a computer to execute a process for design supporting, the process comprising:
extracting a component from a three-dimensional model that includes a combination of a plurality of components; and
displaying determination results, in a display form predetermined in the determination results, the determination results being obtained by determining whether a component other than the extracted component interferes with a virtual model, generated on the three-dimensional model, in a relationship between the virtual model and the extracted component.

15. A design support method comprising:
extracting a component from a three-dimensional model that includes a combination of a plurality of components; and
displaying determination results, in a display form predetermined in the determination results, the determination results being obtained by determining whether a component other than the extracted component interferes with a virtual model, generated on the three-dimensional model, in a relationship between the virtual model and the extracted component.
